# EUROPÄISCHE PATENTSCHRIFT

(11) **EP 3 717 793 B1**
(45) Veröffentlichungstag und Bekanntmachung des Hinweises auf die Patenterteilung: **23.10.2024**
(21) Anmeldenummer: 18814795.3
(22) Anmeldetag: 22.11.2018
(51) Int. Cl.: F16F 9/54, F16F 9/32, B60G 3/06, B60G 13/00

(54) **VERBINDUNGSEINRICHTUNG FÜR DIE ANBINDUNG EINER DÄMPFUNGSEINHEIT EINES FAHRZEUGS INNERHALB EINER RADAUFHÄNGUNG DES FAHRZEUGS**
CONNECTION SYSTEM FOR CONNECTING A DAMPING UNIT OF A MOTOR VEHICLE INSIDE A WHEEL SUSPENSION OF SAID VEHICLE
DISPOSITIF DE CONNEXION POUR RATTACHER UNE UNITÉ D'AMORTISSEMENT D'UN VÉHICULE AU SEIN D'UNE SUSPENSION DE ROUE DU VÉHICULE

(30) Priorität: 23.11.2017 DE 102017010860; 12.10.2018 DE 202018004756 U
(43) Veröffentlichungstag der Anmeldung: 07.10.2020
(73) Patentinhaber: Raufoss Development AS, 2830 Raufoss (NO)
(72) Erfinder: HØILAND, Thorbjørn, 2818 Gjøvik (NO); BOSCA, Renata, Montreal H4V 1Z1 (CA); PEDERSEN, Roald, Egil, Helland, 3612 Kongsberg (NO); SEINESS, Håkon, Johan, 9022 Krokelvdalen (NO); KHAJEHGANI, Ali, 2827 Hunndalen (NO)
(74) Vertreter: Leinweber & Zimmermann
(86) Internationale Anmeldenummer: PCT/EP2018/082260
(87) Internationale Veröffentlichungsnummer: WO 2019/101881

(56) Entgegenhaltungen:
- EP-A1- 1 683 663
- EP-A1- 2 614 969
- WO-A1-2008/082305
- JP-A- H11 294 512

## Beschreibung

Die Erfindung betrifft eine Verbindungseinrichtung für die Anbindung einer Dämpfungseinheit eines Fahrzeugs innerhalb einer Radaufhängung des Fahrzeugs, wobei die Verbindungseinrichtung aufweist, einen oberen Anbringungsbereich zum Anbringen der Dämpfungseinheit, der insbesondere wenigstens teilweise einen Aufnahmeraum für die Dämpfungseinheit umgibt, wobei sich der Aufnahmeraum um eine erste Achse als die Dämpfungsachse der Dämpfungseinheit erstreckt, einen unteren Anbringungsbereich für die Ankopplung an den radseitigen Teil der Radaufhängung, wobei der untere Anbringungsbereich insbesondere zwei voneinander beabstandete untere Abschnitte mit einem Anbringungsraum dazwischen aufweist, und einen Zwischenbereich, der den oberen Anbringungsbereich mit dem unteren Anbringungsbereich verbindet, wobei die Haupterstreckung des Zwischenbereichs der Richtung der ersten Achse entspricht, und wobei der Zwischenbereich das Passieren einer Antriebswelle des Fahrzeugs erlaubt.

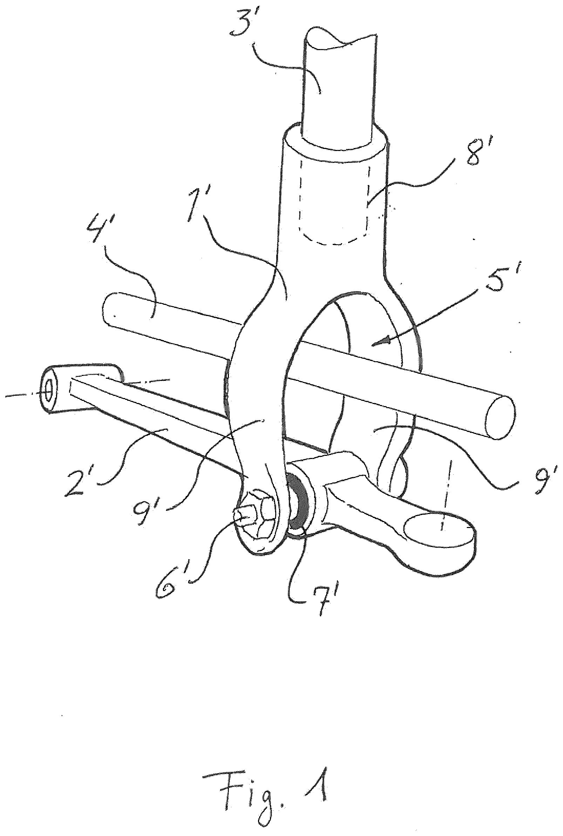

Derartige Verbindungseinrichtungen sind auf dem Gebiet der Fahrzeugtechnik gut bekannt. Eine beispielhafte Verbindungseinrichtung des gegenwärtigen Standes der Technik ist in Fig. 1 gezeigt. Die Verbindungseinrichtung, die aufgrund ihrer Form ebenfalls "Gabelstück" (yoke) bezeichnet werden könnte (und im Folgenden bezeichnet wird), verbindet ein Dämpfungs- und Federmodul, das eine Dämpfungseinheit 3' bildet, mit einem unteren Aufhängearm 2' einer Vorderradaufhängung eines Fahrzeugs. Das Gabelstück 1' hat an seinem oberen Ende eine innere zylindrische Kopplungsfläche 8', die die Dämpfungseinheit 3' aufnimmt und befestigt. Von der Kopplungsfläche 8' erstrecken sich zwei Beine 9' gabelartig, um eine Öffnung 5' zwischen ihnen zu haben, durch welche eine Antriebswelle 4' des Fahrzeugs passieren kann. An den unteren Enden der Beine 9' ist der untere Aufhängearm 2' befestigt beispielsweise durch einen Bolzen 6' unter Verwendung einer nachgiebigen Buchse 7'. Neben dem in Fig. 1 gezeigten Aufbau kann eines der Beine des Gabelstücks weggelassen werden, wenn das verbleibende Bein ausreichende Festigkeit (strength) aufweist und, wenn erforderlich, entsprechend verstärkt ist.

Derartige Gabelstücke werden hauptsächlich mittels eines Guss- oder Schmiedeverfahrens hergestellt. Jedes Verfahren hat seine jeweiligen Vorteile. So ermöglicht das Gussverfahren ein hohes Niveau an Integration wie auch die Möglichkeit, eine komplexe Geometrie des Gabelstücks zu schaffen. Das Schmiedeverfahren ermöglicht die Verwendung hochfester und ductiler Materialien. Demgemäß werden bei dem Gussverfahren üblicherweise Materialien wie etwa Eisen oder Aluminium herangezogen, wohingegen beim Schmiedeverfahren Stahl oder Aluminium verwendet wird. WO 2008/082305, der als nächstliegender Stand der Technik betrachtet wird, offenbart ein extrudiertes und zu einer Verbindungseinrichtung geformtes Halbzeug.

Der Erfindung liegt die Aufgabe zugrunde, eine Verbindungseinrichtung wie in dem eingängigen Teil definiert bereitzustellen, welche zufriedenstellende mechanische Eigenschaften zur verlässlichen Verbindung der Dämpfungseinheit mit der Radaufhängung aufweist und welche in einer effizienten Weise herstellbar ist.

Diese Aufgabe wird durch eine Verbindungseinrichtung mit den Merkmalen von Anspruch 1 gelöst. Die Verbindungseinrichtung ist zum Einen aus einem extrudierten Teil gefertigt, dessen Extrudierrichtung die Erstreckungsrichtung des extrudierten Materials ist, welches dann den Zwischenbereich der Verbindungseinrichtung bildet. Die einbezogenen Herstellschritte können Schneiden und können (zusätzlich) Verformen umfassen, um die Form der Einrichtung zu erreichen.

Im Rahmen der Erfindung ist nämlich erkannt worden, dass derartige Verbindungseinrichtungen (yokes), wenn durch Gießen hergestellt, dazu neigen, schwer zu sein. Dies ist aufgrund der Stärke und den Dauerbeanspruchs(Ermüdungs)-Eigenschaften der herangezogenen Materialien, und der Streckung vor Bruch, sollte ein Schaden oder eine Überlastung auftreten. Darüber hinaus können gegossene Gabelstücke eine Tendenz zur Porosität aufweisen, welche dann wiederum mit großen Querschnitten kompensiert wird, die zu dem hohen Gewicht führen. Letzteres tritt ebenfalls auf, wenn ein vergleichsweise leichtes Material wie Aluminium herangezogen wird. Darüber hinaus benötigt das Gussverfahren ein hohes Niveau von Qualitätskontrolle, wie etwa visuelle Inspektion wie auch andere Verfahren wie das Heranziehen von Röntgenstrahlen.

Auf der anderen Seite ergeben geschmiedete Gabelstücke, als positive Eigenschaft, leichtgewichtige Produkte unter Verwendung wärmebehandelbarer, hochfester Materialien. Die Herstellung ist jedoch vergleichsweise komplex und ist mit höheren Kosten verbunden. Typischerweise ist nämlich der Materialverbrauch während des Schmiedens hoch, aufgrund der Menge des erzeugten "Flash", welches von dem Produkt abgeschnitten wird. Darüber hinaus führt die dreidimensionale "irreguläre" Form des Gabelstücks zu einem komplexen Schmiedeprozess, der die Ausführung einer oder mehrerer Schritte involviert, bevor das Produkt fertiggeschmiedet ist. Danach muss der Schmiedegrad (Flash) in einer getrennten Operation entfernt werden. Auch das Schmiedeverfahren erfordert Überprüfungsschritte nach dem Schmieden, wie etwa visuelle Inspektionen, oder mit z.B. der Farbeindringprüfung, um auf Schmiedefehler oder Hitzerisse zu prüfen.

Ein weiteres Herstellungsverfahren für Gabelstücke, das in der Technik herangezogen wird, ist Tiefziehen. Aufgrund der Natur des Tiefziehprozesses verwendet man jedoch vergleichsweise dünnes Flächenmaterial in dem Bereich von 3 bis 5 mm, eine Dicke, die als solche nur unzureichend zur Steifheit und Festigkeit des Gabelstücks beiträgt. Dies wird dann durch große Oberflächenabschnitte kompensiert, in die ebenfalls eine "Form" eingebaut sein kann, was in vergleichsweise sperrigen und schweren Gabelstücken resultiert. Da es nur einen begrenzten Bauraum zur Integrierung des Gabelstücks in dem gesamten Fahrgestellsystem gibt, besteht ein Konflikt im Finden von ausreichendem Unterbringungsplatz und Beibehaltung ausreichender Leistungsfähigkeit des Gabelstücks hinsichtlich Festigkeit (strength) und Steifheit.

Im Gegensatz dazu ist die Verbindungseinrichtung gemäß der vorliegenden Erfindung aus einem extrudierten Teil (Extrusionsprofil) gebildet, dessen Extrudierrichtung die Erstreckungsrichtung des extrudierten Materialbereichs des extrudierten Teils ist, der dann (d.h., in der fertigen Verbindungseinrichtung) den Zwischenbereich der Verbindungseinrichtung bildet. Dadurch wird, verglichen mit den anderen oben erläuterten Verfahren ein wirksames Verfahren zur Herstellung der Gabelstück-Geometrie bereitgestellt, obwohl das extrudierte Teil selbst noch nicht alle Gesichtspunkte der erforderlichen dreidimensionalen Geometrie des Gabelstücks definieren kann. Durch den Extrudiervorgang ist es jedoch möglich, extrudiertes Material nahe den Bereichen bereitzustellen, wo das Material in der Verbindungseinrichtung effektiv angeordnet wird, und extrudiertes Material ohne funktionale Verbindung für die Verbindungseinrichtung kann durch einen Schneidprozess entfernt und in dem Herstellungsprozess recycelt werden, so dass ebenfalls eine effiziente Verwendung des Extrudiermaterials gegeben ist. Das Extrudiermaterial ist bevorzugt eine hochfeste Aluminiumlegierung, z.B. eine der 6000- oder 7000-Serie, die vorteilhafte Festigkeiten und Steifigkeiten der Verbindungseinrichtung trotz ihres vergleichsweise geringen Gewichts (d.h., Dichten im Bereich zwischen 2,7 und 2,8 g/cm³) bereitstellen, insbesondere mit effizienten Querschnitten, so dass der Schnitt den Biegemomenten mit geringem Verbrauch an Materialressourcen widersteht, aufgrund der Materialverteilung um die Hauptbiegeachsen.

Darüber hinaus ist für die Verbindungseinrichtung gemäß der vorliegenden Erfindung die axiale Erstreckung des oberen Anbringungsbereichs von einer Querschnittsfläche des Materials in dem Extrudierprozess, welches dann den Zwischenbereich bildet, entkoppelt.

Aufgrund des Extrudierprozesses kann die Gesamtabmessung, insbesondere die Festigkeit und Steifheit skaliert werden, um zu unterschiedlichen Lasten in dem zu erwartenden Gebrauch der Verbindungseinrichtung zu passen, z.B. in unterschiedlich konfigurierten Fahrzeugen. Eine typische Festigkeit kann im Bereich von 40 bis 80 kN axialer Last in Dämpfungsrichtung liegen.

Wie in einer bevorzugten Ausführungsform entspricht die axiale Erstreckung der Verbindungseinrichtung entlang der ersten Achse im Wesentlichen einer Abschneidelänge des extrudierten Teils oder ist um einen Betrag kürzer, um den die Verbindungseinrichtung aufgrund einer Biegung eines Beines/von Beinen, welche einen Freiraum zum Passieren der Antriebswelle vergrößert, verkürzt ist. Dies erlaubt eine weitere Materialeinsparung im Herstellungsprozess.

Weiter kann der freie Raum wenigstens teilweise durch einen Ausschnitt eines extrudierten Materials unterhalb des extrudierten Materials gebildet sein, welches den oberen Anbringungsbereich bildet, oder durch eine Verformung dieses Materials. Dies erlaubt einen ausreichenden Freiraum in der fertiggestellten Verbindungseinrichtung, obgleich für das extrudierte Teil extrudiertes Material anderweitig den Freiraum wenigstens teilweise blockieren würde. Die Menge des ausgeschnittenen Materials kann mehr als 30%, mehr als 50% und auch mehr als 70% der Differenz in der Materialmenge zwischen der fertiggestellten Verbindungseinrichtung und dem extrudierten Teil betragen.

In einer weiteren Ausführungsform kann das extrudierte Teil einen extrudierten Materialbereich aufweisen, der dann im Teil ein funktionales Element der Verbindungseinrichtung bildet, aber sich auch in dem (ersten) Aufnahmeraum erstreckt. Hier wird, obwohl das Material in dem (ersten) Aufnahmeraum liegt und daher in einem nachfolgenden Prozessschritt nachfolgend dem Extrudieren entfernt werden muss, dieser zusätzliche Schritt in Kauf genommen, um weiteres extrudiertes Material unterhalb des oberen Anbringungsbereichs zu gewinnen. Dieser extrudierte Materialbereich ist der, der sich durch Extrudieren durch die gleiche formgebende Fläche senkrecht zur Extrudierrichtung ergibt.

Diesbezüglich können die funktionalen Elemente eine oder mehrere Verstärkungsrippen für das eine oder die mehreren Beine des Zwischenbereichs sein, oder eine Brücke, die die beiden unteren Abschnitte miteinander verbindet. Letzteres erlaubt es, z.B., weniger Material in dem Zwischenbereich zu haben, aber immer noch einen zweiseitigen Anbringungsbereich für die Kopplung an die Radaufhängung, ersteres erlaubt für eine verstärkte Festigkeit und Steifheit ohne die Notwendigkeit, verglichen mit einem in der Größe hochskalierten Gabelstück weiteren Unterbringungsraum in dem Fahrzeug bereitstellen zu müssen. In einer Ausführungsform ist eine Anschlagfläche für die Dämpfungseinheit am oberen Ende einer Verstärkungsrippe gebildet.

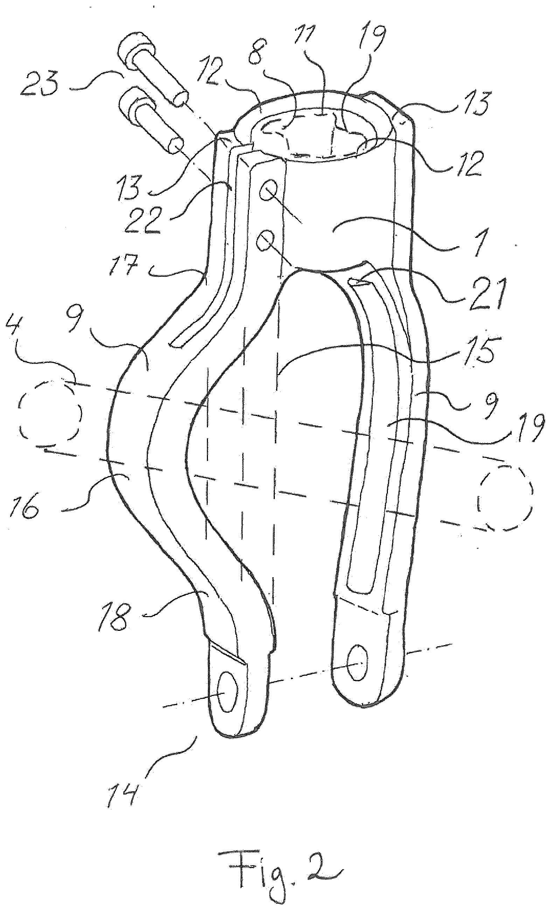

Es mag Ausführungsformen geben, in denen der Zwischenbereich nicht wesentlich geändert ist hinsichtlich seiner Orientierung bezüglich des extrudierten Teils. In einigen Ausführungsformen mag es jedoch nützlich sein, ein oder zwei Beine der Verbindungseinrichtung bezüglich des extrudierten Teils zu verformen, um so den Freiraum zu vergrößern, während seine/ihre Haupterstreckungsrichtung immer noch beibehalten wird als die des extrudierten Teils. Beispielsweise kann ein Biegen mit Auswärts-Buckeln herangezogen werden, z.B. mit zwei Biegeabschnitten oder selbst drei Biegeabschnitten (wie in Fig. 2 gezeigt). Haupterstreckungsrichtung ist weiterhin die erste Achsrichtung, als größte Richtungskomponente einer Verbindungslinie zwischen den entgegengesetzten Enden des Zwischenbereichs (Beinbereichs) in einem rechtwinkligen Koordinatensystem, das als Z-Achse die erste Achse hat.

In einer weiteren Ausführungsform kann das extrudierte Material des extrudierten Teils, welches wenigstens einen oberen Beinbereich bildet, wenigstens teilweise auch in dem Bereich axialer Länge des oberen Anbringungsbereichs der Verbindungseinrichtung gebildet sein. Auf diese Weise kann eine feste und steife Verbindung zwischen dem Zwischenbereich und dem oberen Anbringungsbereich erreicht werden. Das Ende eines solchen Beinbereichs an der dem unteren Anbringungsbereich entgegengesetzten Seite kann sich bis zum oberen Ende des oberen Anbringungsbereichs erstrecken, muss aber nicht notwendigerweise. Zudem kann sich das Bein in Form einer vergrößerten Wanddicke der von dem oberen Anbringungsbereich gebildeten Umfassung erstrecken, mit konstanter Querschnittsfläche in einer Ebene orthogonal zu der ersten Achse, aber ebenfalls mit einer in Richtung des oberen Endes des oberen Anbringungsbereichs verringerten Querschnittsfläche.

Erfindungsgemäß weist die Umfassung des Aufnahmeraums einen axialen Schlitz auf, der einen Klemmsitz der Dämpfungseinheit in dem Aufnahmeraum erlaubt. Dazu kann, in dem der Schlitz durch eine geeignete Klemmkraft geschlossen oder verengert wird, ein starker Sitz für die in dem (ersten) Aufnahmeraum aufgenommene Dämpfungseinheit gebildet werden.

Eine derartige Klemmeinrichtung kann vorgesehen werden in Form des oberen Beinbereichs, der einen Schlitz aufweist, welcher im Wesentlichen mit dem Schlitz der Umfassung ausgerichtet ist. In diesem oberen Beinbereich können beispielsweise Schraubbolzen eingeführt werden, um die Schlitzbreite zu verringern oder zu weiten. Zu diesem Zweck können Schneidschritte und Bohrschritte oder Gewindebohrschritte nach der Extrusion des extrudierten Teils vorgesehen werden.

Die Klemmeinrichtung kann jedoch ebenfalls in Form eines externen Teils vorgesehen sein, der nicht zusammen mit dem extrudierten Teil extrudiert ist, in Form eines Kragens oder einer Hülse mit variablem Durchmesser.

Ein Bein kann wenigstens teilweise von extrudiertem Material gebildet sein, das in seinem oberen Abschnitt die Umfassung bildet, ebenfalls von solchem Material, das in der Umfassung den Bereich mit der geringen Wanddicke bildet.

In einer bevorzugten Ausführungsform ist nämlich für die Umfassung vorgesehen, dass sie wenigstens einen Wandabschnitt einer ersten Wanddicke und wenigstens einen Wandabschnitt einer zweiten Wanddicke aufweist, die größer ist als die erste Wanddicke. Bevorzugt ist die Verbindung zwischen dem Zwischenbereich und dem oberen Anbringungsbereich an den Abschnitten der größeren zweiten Wanddicke gegeben.

In einer bevorzugten Ausführungsform ist die erste Wanddicke geringer als die Quadratwurzel der geringsten Querschnittsfläche des Zwischenbereichs in einer Querschnittsfläche einer Ebene orthogonal zu der ersten Achse, insbesondere geringer als 2/3 dieser Quadratwurzel, weiter insbesondere geringer als 1/2 dieser Quadratwurzel. Dies erlaubt eine weitere Materialeinsparung und entsprechend die Herstellung von leichtgewichtigen Verbindungseinrichtungen mit immer noch starker Dicke und Steife in der Axialrichtung.

In einer weiteren Ausführungsform kann die axiale Erstreckung des oberen Anbringungsbereichs entlang der ersten Achse größer sein als 1,2 mal der geringsten Querabmessung des Zwischenbereichs bezüglich der ersten Achse, insbesondere größer als 1,6 mal dieser Querabmessung. Dies erlaubt bei durch den Zwischenbereich gegebener Festigkeit und Steifigkeit einen größeren inneren Flächenbereich der Umfassung zur Erhöhung der Haltekraft zwischen der Dämpfungseinheit und der Verbindungseinrichtung in dem montierten Zustand.

Wie bereits gesagt, enthält das Extrusionsmaterial bevorzugt Aluminium, insbesondere wenigstens 80% Aluminium und ist insbesondere eine Aluminiumlegierung, insbesondere von der 6000- oder 7000-Serie. Insbesondere bevorzugt ist die EN-AW (AA) 6082 Legierung.

Die Abmessungen, insbesondere die geringste Querschnittsfläche des Zwischenbereichs, sind nicht in besonderer Weise eingeschränkt und können abhängig von Höhe und Breite des Gabelstücks abhängen, welche die auftretenden Biegemomente beeinflussen.

Es ist jedoch bevorzugt, dass die geringste Querschnittsfläche des Zwischenbereichs bevorzugt wenigstens 4 cm², weiter bevorzugt wenigstens 5 cm², insbesondere wenigstens 6 cm² beträgt.

Hinsichtlich des Herstellungsverfahrens stellt die Erfindung bereit ein Verfahren zur Herstellung einer gemäß einem der vorangegangenen Gesichtspunkte ausgebildeten Verbindungseinrichtung, aufweisend die Schritte des Extrudierens des extrudierten Teils, aus dem dann die Verbindungseinrichtung gebildet wird, und Ausführen von Schneidschritten zur Entfernung extrudierten Materials, das nicht Teil der Verbindungseinrichtung wird. Bevorzugt wird die Herstellung mit einem kontinuierlichen Produktstrom ausgeführt. Dazu können Prozessschritte ausgeführt werden unter Verwendung einer Serie von Presswerkzeugen in einer oder mehreren Pressen, in einem verbundenen Prozess, wobei die Pressen die Schneid- und optional die Verformschritte ausführen. Zusätzliche Maschinenwerkzeuge können vorgesehen werden, um die Verbindungseinrichtung mit Schlitzen, Anbringungslöchern (mit oder ohne Gewinde), Abrundungen, Fasen zu versehen, wie für die Endgeometrie der Verbindungseinrichtung gewünscht. Da hinsichtlich der Hauptlängsorientierung das meiste des extrudierten Materials ausgehend von dem extrudierten Teil bereits nahezu in der richtigen Orientierung vorliegt, können die Schneid- oder Verformprozesse eine Änderung in der Form des Gabelstücks bewirken, aber die Haupterstreckungsrichtung wird beibehalten.

Weiter offenbart die Erfindung ebenfalls die Vorform der Verbindungseinrichtung in Form des extrudierten Teils, mit den bereits oben erwähnten Merkmalen und stellt auch eine Radaufhängung mit einer solchen Verbindungseinrichtung und ein Fahrzeug mit einer solchen Radaufhängung bereit.

Die Gabelstücke gemäß der Erfindung können, bei der Herstellung, auf Anpassung an unterschiedliche Lasten skaliert werden, z.B. wenn der gleiche Typ von Radaufhängung in einem Auto verwendet wird, das unterschiedliche Gewichte für unterschiedliche Modellvarianten hat, in dem entsprechend skalierte Extrudierformen herangezogen werden, ohne dass der Gesamtaufbau des Gabelstücks geändert werden muss. In der gleichen Weise kann die Produktion einfach geändert werden auf andere Varianten (z.B. von einer Variante linkshändiger Seite zu rechtshändiger Seite, abgesehen von den skalierten Varianten).

Indem von den oben erwähnten Gesichtspunkten Gebrauch gemacht wird, kann eine erwünschte Gabelstück-Geometrie unter Verwendung geringen Bauraums in einfacher Weise hergestellt werden. Weiter kann aufgrund des Extrudierprozesses eine starke und dauerhafte Gabelstück-Geometrie erhalten werden, mit starken und wirksamen Kopplungs-Interfaces zur Dämpfungseinheit und Radaufhängung, obwohl das Gabelstück in einer vergleichsweise leichtgewichtigen Art und ebenfalls in einer kosteneffizienten Art erhalten wird.

Darüber hinaus wird ein hohes Niveau an Integration von Funktionen erhalten, indem die Extrudierrichtung des extrudierten Teils die Erstreckungsrichtung des extrudierten Materials ist, dass dann den Zwischenbereich der Verbindungseinrichtung bildet.

Die Erfindung offenbart in einem weiteren Aspekt eine Verbindungseinrichtung für die Anbindung einer Dämpfungseinheit eines Fahrzeugs innerhalb einer Radaufhängung des Fahrzeugs, mit einem ersten Bereich, der einen Aufnahmeraum für die unter einer darin unter einer Haltekraft aufgenommenen Dämpfungseinheit in einer bezüglich ihrer Dämpfungsachse umfänglichen Richtung wenigstens teilweise umgibt und der über eine Stabilisatorankopplung für eine Abstützung an einem Stabilisator des Fahrzeugs ausgebildet ist, und einem zweiten Bereich für die Ankopplung an den radseitigen Teil der Radaufhängung, wobei der zweite Bereich zwei mit dem ersten Bereich verbundene und in einer Richtung quer zur Dämpfungsachse voneinander beabstandete und einander gegenüberliegende Beinbereiche aufweist, und eine Radaufhängungsanordnung mit einer solchen Verbindungseinrichtung.

Verbindungseinrichtungen ähnlicher Bauart sind bekannt, beispielsweise aus der EP 1 683 663 A1, deren Fig. 2 in Fig. 8 dieser Anmeldung wiedergegeben ist. Oberhalb der beiden Beine der Federgabel 103' ist ein mit Bezugszeichen 104' bezeichnetes Federbein angeordnet, das eine Dämpfungseinheit darstellt. Die Federbeingabel 103' weist eine Stabilisatorankopplung auf, an der eine Verbindung mit einem Stabilisator 101' angreift. Die Ankopplung erfolgt über ein an der dem Betrachter abgewandten Seite der Federgabel angeflanschtes Lager, an das eine Koppelstange 106' angelenkt ist, die am anderen Ende über ein weiteres Verbindungslager gelenkig mit dem Stabilisator 101' verbunden ist. Gegenüber einer senkrechten Achse X'-X' verläuft die Koppelstange 106' unter einem Winkel α'. Eine Auslenkbewegung des Stabilisators 101' in Pfeilrichtung 102' wird begrenzt durch eine Konsole 105', die mit einer Befestigungsschraube 114' im unteren Bereich der Federgabel befestigt ist, indem zwischen den beiden Beinen ein unteres Radführungsglied angekoppelt ist. Zum Anschlag gelangt dabei ein Lagerschraubenkopf 111' an einer Stirnseite 112' eines Verbindungslagers 113'. Eine Abstützkraft der Federgabel an dem Stabilisator 101' wird über die Anlenkung der Koppelstange 106' und die Koppelstange 106' in den Stabilisator 101' eingeleitet. Der Kontakt zwischen der Anschlagkonsole 105' und dem Stabilisator 101' ist nicht permanent vorhanden, sondern nur bei bestimmten Fahrmanövern. Eine Relativbewegung zwischen dem Stabilisator 101' und der Anschlagkonsole 105' ist minimiert, da der Anschlag an dem Fahrwerkselement befestigt wird, an dem auch der Stabilisator 101' über die Koppelstange 106' angebunden ist. Aufgrund des Anschlags wird eine Querbewegung des Stabilisators 101' im Fahrbetrieb begrenzt, damit keine übermäßigen Kräfte die Koppelstange und somit die Anordnung aus Verbindungseinrichtung und Dämpfungseinheit belasten können.

Bezüglich dieses weiteren Aspekts ist bevorzugt vorgesehen, eine Verbindungseinrichtung der eingangs genannten Art bereitzustellen, die eine zufriedenstellende Kombination aus einem einfachen Aufbau, insbesondere einfach herstellbarem Aufbau und zuverlässiger Ankoppelbarkeit an Dämpfungseinheit und Stabilisator leistet, indem die Abstützkraft wenigstens zum Teil über einen eine Klemmkraft zur Erzeugung der Haltekraft hervorrufenden Klemmmechanismus geleitet wird.

Die Abstützkraft oder generell zwischen Stabilisator und Verbindungseinrichtung wirkende Kräfte müssen somit nicht mehr über eine separat bereitzustellende Stabilisatorankopplung geleitet werden, sondern werden wenigstens zum Teil über einen Klemmmechanismus geleitet, der dazu vorgesehen ist, eine Klemmkraft auszuüben, aufgrund der die Dämpfungseinheit in dem Aufnahmeraum des ersten Bereichs der Verbindungseinrichtung gehalten wird. Da diese Kräfte über die Stabilisierungsankopplung verlaufen, ist letztere mit anderen Worten in den Klemmmechanismus integriert.

Der Klemmmechanismus ist bevorzugt ein schellenartiger Mechanismus. Bei diesem können die freien Schellenenden über einen oder mehrere stiftartige Verbindungselemente geschlossen werden. Denkbar hierzu sind durch Bohrungen geführte Bolzen, die durch Aufbringen einer Mutter die Klemmkraft bewirken, oder auch z.B. Bolzen, deren Gegengewinde in den freien Enden der Schelle integriert sind. Bevorzugt kann der Schellenmechanismus einstückig mit der Verbindungseinheit gefertigt sein. Eine besonders bevorzugte Herstellungsart ist die Bildung der Verbindungseinrichtung durch ein Extrudierverfahren, insbesondere aus Aluminiumprofilen (Aluminium oder einer Aluminiumlegierung). Die Erfindung weist jedoch ebenfalls Vorteile bei anderweitig hergestellten Verbindungseinrichtungen auf, wie etwa durch Schmieden oder Gießen hergestellten. Denkbar ist ebenfalls eine Fertigung aus Metallblechen. Auch hier besteht nicht mehr das Erfordernis, individuelle Ansätze für Ankopplungen, die z.B. mit Bolzen zusammenwirken, mehrfach vorzusehen bzw. in die insbesondere einstückig geformte Verbindungseinrichtung zu integrieren. Auf diese Weise kann nicht nur Material eingespart, sondern auch das Herstellungsverfahren insgesamt vereinfacht werden.

Die Stabilisatorankopplung weist somit eine Multifunktionalität auf und dient einerseits der Ankopplung des Stabilisators und andererseits der Erzeugung der Klemmkraft über den Klemmmechanismus.

In einer bevorzugten Gestaltung wird die Abstützkraft über ein Spannelement, insbesondere einen Spannbolzen des Klemmmechanismus geleitet. Grundsätzlich ist es jedoch auch denkbar, dass ein Ansatz für die Stabilisatorankopplung und ein Ansatz für den schellenartigen Klemmmechanismus einen gemeinsamen oder gemeinsam geformten Ansatz ausbilden.

In einer Fortbildung der oben genannten Ausgestaltung ist vorgesehen, dass das Spannelement und das Befestigungselement eine gemeinsame Streckungsachse aufweisen und insbesondere das Befestigungselement das Spannelement bildet. Auf diese Weise können weitere Bauteile eingespart werden.

In einer weiteren bevorzugten Ausführungsform weist der Klemmmechanismus einen insbesondere einstückig mit dem ersten Bereich gebildeten Ansatz mit einer Aufnahme für das Spannelement auf, insbesondere mit Bohrungen in zwei bei zu erzeugender Klemmkraft aufeinander zu bewegten Ansatzteilen. Zwischen den Ansatzteilen ist ein Spalt ausgebildet, der bei Ausübung der Klemmkraft geschlossen wird und dadurch die Dämpfungseinheit in dem Aufnahmeraum hält. Für die Ankopplung des Stabilisators können eines oder beide der Ansatzteile herangezogen werden.

In einer zweckmäßigen Ausgestaltung liegen einander zugewandte Flächen der Ansatzteile im Montagezustand aufrechterhaltener Klemmkraft aneinander an. Bei derartigen Lösungen bedarf es keiner zwischen den Ansatzteilen eingeklemmten Haltearmen, die außerhalb des Aufnahmeraums an der Dämpfungseinheit angreifen müssten. Vielmehr wirkt die Haltekraft nur im Bereich des Aufnahmeraums auf die Dämpfungseinheit.

In diesem Zusammenhang ist weiter bevorzugt vorgesehen, dass sämtliche auf Höhe des Aufnahmeraums liegende Bestandteile der Dämpfungseinheit sowie mit dieser fest verbundene Teile radial innerhalb des Aufnahmeraums liegen. Dies verringert den Bauraumbedarf und erlaubt schlankere Gestaltungen der Verbindungseinrichtung, wenn die Dämpfungseinheit aufgenommen ist.

In einer weiteren bevorzugten Ausgestaltung ist vorgesehen, dass der erste Bereich neben dem Ansatz des Klemmmechanismus keine weiteren, insbesondere Bohrungen aufweisenden Ansätze aufweist. Dies erleichtert wiederum die Herstellung der Verbindungseinrichtung, insbesondere bei der bevorzugten Variante des Extrudierverfahrens, jedoch auch bei Herstellungsverfahren des Schmiedens oder Gießens, aufgrund der einfacheren Grundform. Im Falle der Herstellung über das Extrudieren wird es bevorzugt, dass die Extrudierrichtung diejenige ist, in der sich die Beine der Verbindungseinrichtung der fertig hergestellten Verbindungseinrichtung erstrecken. Der Schellenmechanismus sowie die Beine werden dabei bevorzugt einstückig hergestellt, wobei Materialbereiche des extrudieren Teils, die keine Funktion mehr haben, weggeschnitten werden. Damit in einem zwischen dem ersten und dem zweiten Bereich der Verbindungseinrichtung gebildeten Zwischenbereich noch genügend freiliegender Raum verbleibt, der das Passieren der Antriebswelle eines Fahrzeugs erlaubt. Hierzu kann beispielsweise bei extrudierten Verbindungseinrichtungen noch ein Biegen von Beinbereichen vorgesehen sein.

In einer bevorzugten Ausführungsform erstrecken sich bereits vom ersten Bereich zwei Beine bis hin zu dem zweiten Bereich, wo ihre freiliegenden Enden die einander gegenüberliegenden Beinbereiche bilden, die Antriebswelle würde dann im Bereich des Zwischenbereichs zwischen den beiden Beinen hindurchgeführt. Ebenfalls bevorzugt sind jedoch auch Varianten, bei denen in dem Zwischenbereich nur ein Beinstamm vorgesehen ist, der sich erst beabstandet zum ersten Bereich in die zwei einander gegenüberliegenden Beinbereiche aufgabelt. Die Anmeldung umfasst somit ebenfalls Gestaltungen des zweiten Bereichs in Form von "one-leg forks".

Durch eine solche Verbindungseinrichtung ergeben sich somit die oben erläuterten Vorteile in der einfachen Gestaltung der Verbindungseinrichtung, ihrer einfachen Herstellung sowie auch ihrer späteren einfachen Montage.

Im Übrigen wird ebenfalls offenbart eine Federbeingabel mit einer Dämpfungseinheit und einer diese aufnehmende Verbindungseinrichtung aus einem der vorgenannten Aspekte, sowie eine Radaufhängungsanordnung mit einer Verbindungseinrichtung nach einem der vorgenannten Aspekte sowie einem an deren Stabilisatorankopplung angekoppelten Stabilisator. Der Stabilisator kann in bekannter Weise an seinem anderen Ende am Fahrwerk befestigt sein.

Weitere Details, Merkmale und Vorteile der Erfindung sind unten mit Bezug auf die beigefügten Figuren beschrieben, von denen
Fig. 1 schematisch eine Grundform eines Gabelstücks (Stand der Technik) zeigt,
Fig. 2 eine erste Ausführungsform eines Gabelstücks gemäß der Erfindung zeigt,
Fig. 3 eine weitere Ausführungsform eines Gabelstücks gemäß der Erfindung zeigt,
Fig. 4 eine weitere Ausführungsform eines Gabelstücks gemäß der Erfindung zeigt,
Fig. 5 eine weitere Ausführungsform eines Gabelstücks gemäß der Erfindung zeigt,
Fig. 6 eine weitere nicht beanspruchte Ausführungsform eines Gabelstücks gemäß der Erfindung zeigt,
Fig. 7 ein Vergleich zwischen einer Form eines Gabelstücks der Erfindung und dem extrudierten Teil zeigt, aus welchem es erzeugt ist,

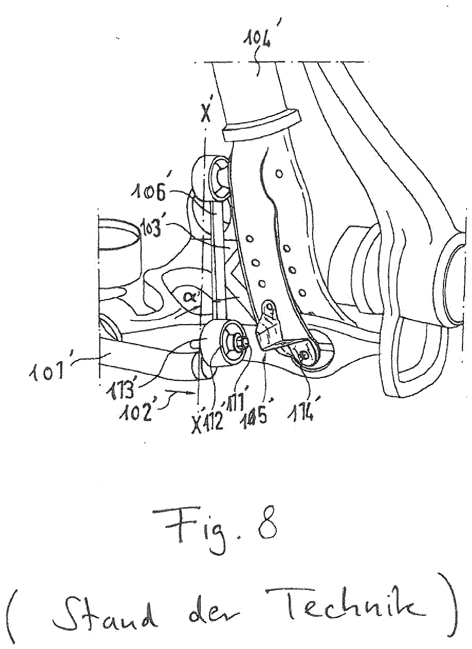

Fig. 8 einen Bereich einer Radaufhängung mit einer Federbeingabel nach dem Stand der Technik zeigt,
Fig. 9 eine Verbindungseinrichtung und z.T. angekoppelte Teile, insbesondere eine Dämpfungseinheit zeigt,
Fig. 10 eine alternative Ausgestaltung eines ersten Bereichs einer Verbindungseinrichtung zeigt,
Fig. 11 zu der Ausgestaltung von Fig. 9 noch schematisch einen Stabilisator zeigt,
Fig. 12 eine alternative Gestaltung eines zweiten Bereichs und Zwischenbereichs einer Verbindungseinrichtung zeigt,
Fig. 13 ein Gabelstück zeigt, und
Fig. 14 eine Verbindungseinrichtung mit ankoppelbaren Teilen zeigt.

Bei dem in Fig. 2 gezeigten Gabelstück 1 ist ein Anbringungsbereich für eine Dämpfungseinheit (nicht gezeigt) durch dünnwandige Abschnitte 12 und dickwandige Abschnitte 13 gebildet, die eine Umfassung zur Unterbringung der Dämpfungseinheit bilden. Bei der vorliegenden Ausführungsform ist die Innenwand-Extrusion 11 zu einem Zylinder 8 hoher Präzision gefertigt, und dazu vorgesehen. Ein Klemmen der Dämpfungseinheit ist über einen in eine der dickwandigen Bereiche 13 des oberen Anbringungsbereichs/der äußeren Wandfläche der Extrusion eingebrachten Schlitz 22 und Löcher/Gewindelöcher zur Aufnahme von Gewindeklemmbolzen 23 erreicht. Über den Schlitz 22 wird das Gabelstück 1 somit in die Lage versetzt, mittels der Klemmkraft der Bolzen 23 die Dämpfungseinheit aufgrund des ausgeübten Drucks und somit der Reibung zwischen den Teilen wirksam zu halten. Dadurch wird der Dämpfer im Einsatz gegen sein Herausziehen aus dem Gabelstück gesichert. Die Druckkraft des Gabelstücks auf den Dämpfer kann von der Außenwandfläche 12, 13 der Extrusion aufgenommen werden, die ebenfalls die dünnwandigen Bereiche 12 umfasst. Es ist zu verstehen, dass der Haltegriff des Gabelstücks 1 Kraft sowohl in der Zug- wie auch in der Druckrichtung absorbiert, wobei die maximale Druckkraft drei- bis viermal höher sein kann als die höchste Zugkraft, und normalerweise die Haltefähigkeit lediglich von Reibungskupplungen übersteigen würde.

Details des Klemmmechanismus können jedoch modifiziert sein, deren Anlagefläche könnte eine anderweitig lokalisierte Fläche sein, oder z.B. eine ringförmige Fläche, die Abmessungen und Anzahl der Wände können unterschiedlich sein, und die Gewinde für die Bolzen mögen ebenfalls nicht in die dicke Wand 13 integriert sein, sondern durch externe Muttern gebildet sein.

Die dickwandigen Bereiche 13 erstrecken sich von dem oberen Anbringungsbereich in ihrer Haupterstreckungsrichtung mehr oder weniger parallel zu der Richtung der Dämpfungsachse. In der vorliegenden Ausführungsform hat ein Bein jedoch Biegungen 16, 17 und 18, welche den freien Raum zwischen den Beinen 9 vergrößern, d.h. der dickwandigen Bereiche 13 unterhalb der zusammen mit den dünnwandigen Abschnitten 12 gebildeten Umfassung. An den freien Enden der dickwandigen Bereiche 13/Beine 9 ist eine Befestigungsfläche 14 vorgesehen, bevorzugt mit Bohrungen (cross drilling) für einen Verbindungsbolzen, der mit einem unteren Arm einer Radaufhängung (nur in Fig. 1 gezeigt) verbindet. Demgemäß sind die gebogenen Bereiche der Beine 9 und die bodenseitige Befestigungsfläche des Gabelstücks in dieser Ausführungsform wie eine gabelartige Anordnung gebildet. Wie in Fig. 2 gezeigt ist, ist der untere Bereich 14 bezüglich des extrudierten Teils weitergehend maschinell bearbeitet, durch Fasen oder Abrunden der unteren Enden, und zur Bildung präziser Anbringflächen in dem Abschnitt, in dem die Bohrungen für den Verbindungsbolzen angeordnet sind. Das Bezugszeichen 15 bezeichnet die Richtung/Position des (linken) Beins 9 wie vor dem Biegen extrudiert, mit seiner Erstreckungsrichtung in Extrudierrichtung.

Weiter weisen die Beine 9 auf ihren sich zugewandten inneren Seiten eine Verstärkungsrippe 19 auf, was das verbleibende von extrudierten Materialbereichen 19 ist (in Fig. 2 auch noch in dem oberen Anbringungsbereich angezeigt). Bei der vorliegenden Ausführungsform enthält das fertiggestellte Gabelstück 1 selbst den Vorsprung 19 innerhalb der inneren Fläche nicht mehr, da durch einen dem Formen des extrudierten Teils, welcher der Bildung des Gabelstücks 1 zugrundeliegt, nachfolgenden Bearbeitungsprozess weggeschnitten wurde. Die Fläche 21 an der Verstärkungsrippe 19 bezeichnet eine Ausgangsfläche, die am Ende des jeweiligen bearbeiteten Bereichs auftritt. Diese Fläche 21 kann flach oder mit einem Radius gebildet werden. Darüber hinaus kann diese Fläche eine Höhenanordnung des Dämpfers bezüglich des Gabelstücks 1 definieren. Zudem ist diese Fläche ebenfalls günstig für das Absorbieren vertikaler Kräfte, die die Fähigkeit des Reibschlusses mit der Dämpfungseinrichtung übersteigen, welche das Gabelstück 1 von dem unteren Aufhängearm der Radaufhängung (nicht in Fig. 2 gezeigt) überträgt.

In gestrichelten Linien ist einerseits die Antriebswelle 4 gezeigt, die sich durch den Freiraum zwischen den Beinen 9 erstreckt. Andererseits zeigen die gestrichelten Linien ebenfalls die Extrudierrichtung 15 der dickwandigen Bereiche 131Beine 9 an. Man erkennt, dass die Extrudierrichtung die Haupterstreckungsrichtung der Beine 9 ist, welche in dem Gabelstück 1 abgesehen von den Biegungen 16, 17, 18 beibehalten ist, die in die Beine 9 eingearbeitet sind, um genug Freiraum zum Passieren der Antriebswelle 4 zu schaffen.

Es ist zu verstehen, dass ein Bein oder beide Beine gebogen sein können. Es ist weiter zu verstehen, dass die Beine voneinander unterschiedlich gebogen sein können.

Als Material für das Gabelstück 1 wird eine hochfeste wärmebehandelbare Aluminiumlegierung wie etwa von der 6000 oder 7000 Serie Al-Legierungen herangezogen, welche die Vorteile von geringem Gewicht und hoher Festigkeit vereinen. Dadurch wird das Gabelstück leichtgewichtig entsprechend den Anforderungen der Fahrzeugkonstrukteure, aber immer noch in der Lage, Kräfte von bis zu einigen Tonnen in jeder der Richtungen zu übertragen.

Obwohl in Fig. 2 ein Gabelstück mit zwei Beinen 9 in dem Zwischenbereich gezeigt ist, sind einbeinige Gabelstückkonstruktionen möglich.

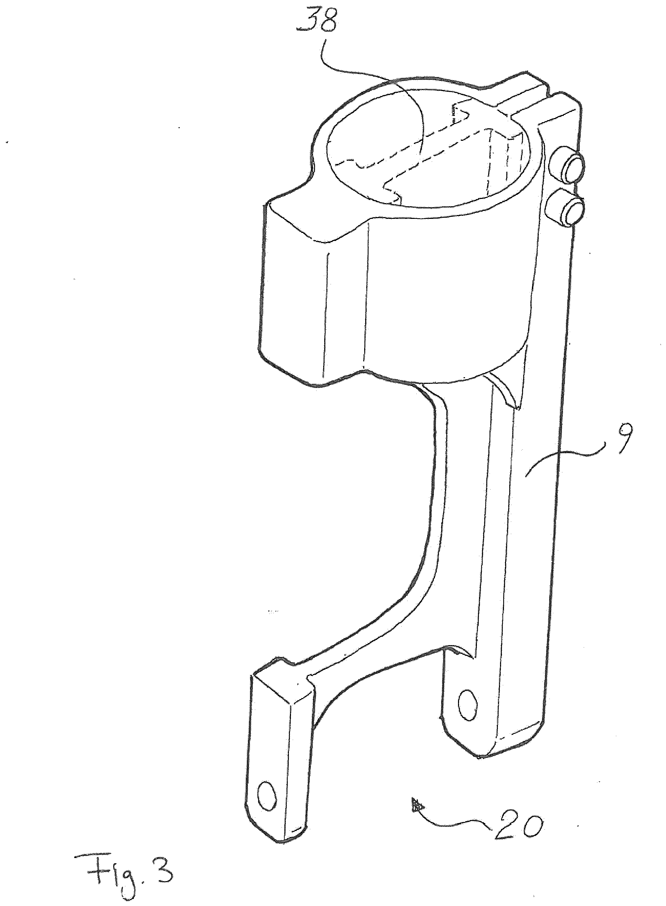

Bei der Ausführungsform von Fig. 3 weist die dem Gabelstück zugrundeliegende Extrusion eine Innenwand (Steg/web 38) auf, die mit den Innenwänden der Umfassung verbunden ist. Bei dem nachfolgenden Bearbeitungsprozess ist der Zwischenbereich eines Beins und Teils des Stegs von der Extrusion weggeschnitten, wobei ein Teil des Stegs 38 als Verstärkungsrippe an dem anderen Bein 9 belassen wird und als eine Verbindung zu dem unteren Beinbereich des in dem Zwischenbereich ausgeschnittenen Beins. Ein weiterer Ausschnitt ist von unten vorgenommen, um die unteren Anbringungsbereiche mit dem zwei unteren voneinander beabstandeten Abschnitten 20 zu erhalten, ähnlich wie bei dem unteren Anbringungsbereich von Fig. 2.

Wiederum ist der Steg 38 innerhalb des Unterbringungsraums für die Dämpfungseinheit in Fig. 3 noch mit gestrichelten Linien gezeigt, in dem oberen Anbringungsbereich des fertiggestellten Gabelstücks jedoch nicht mehr vorhanden.

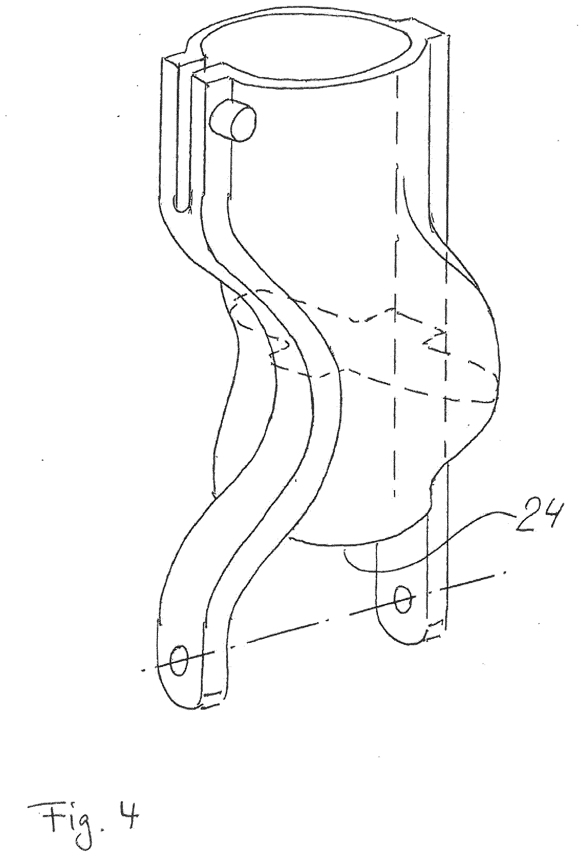

Bei der in Fig. 4 gezeigten Ausführungsform gibt es keine derartige Verbindungsbrücke wie in Fig. 3, aber das extrudierte Teil/die Extrusion ist durch Drücken verformt, um den freien Raum für die Antriebswelle zu schaffen. Wiederum bekommt das extrudierte Teil an der Bodenseite Ausschnitte 24, um den Anbringungsraum für die Kopplung an die Radaufhängung zu definieren.

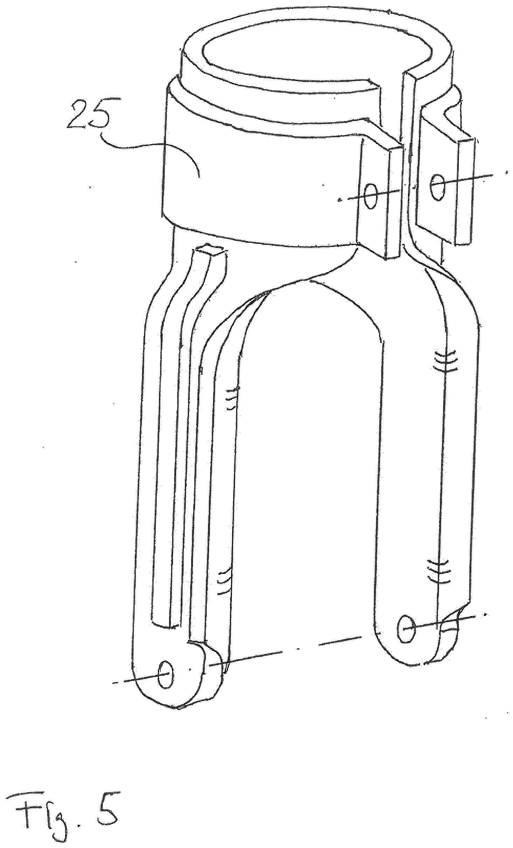

Bei der Ausführungsform von Fig. 5 ist ein Gabelstück gezeigt, das durch Schneiden und Verformen einer offenen Extrusion erhalten ist, welche an der Oberseite durch eine getrennte Klammer 25 geschlossen wird. Der freie Raum ist durch Wegschneiden von Material und/oder einiges Biegen erreicht, wie in Fig. 5 gezeigt ist. Zudem können Verstärkungsrippen an den äußeren Flächen über das Extrudieren erhalten werden (und in dem axialen Abschnitt des oberen Anbringungsbereichs ausgeschnitten sein).

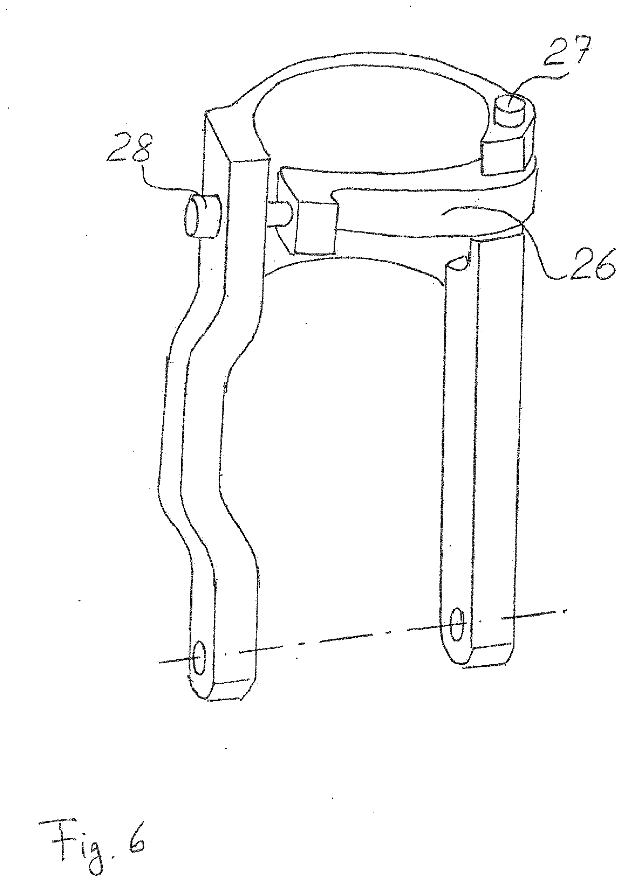

Bei der nicht beanspruchten Ausführungsform von Fig. 6 ist das Gabelstück 1 aus einem offenen Extrusionsprofil ausgeschnitten, wobei ein Schließteil an der Oberseite vorgesehen ist durch ein scharnierartiges Verbindungsteil 26, das als ein externes Teil vorgesehen werden kann und in einen axialen Ausschnitt eines der Beine eingeführt und darin mittels eines Scharnierstifts 27 befestigt werden kann, wobei dieses Teil 26 das andere Bein zum Schließen des Unterbringungsraums für die Dämpfungseinheit mit einem Klemmbolzen/einer Klemmschraube 28 erreicht.

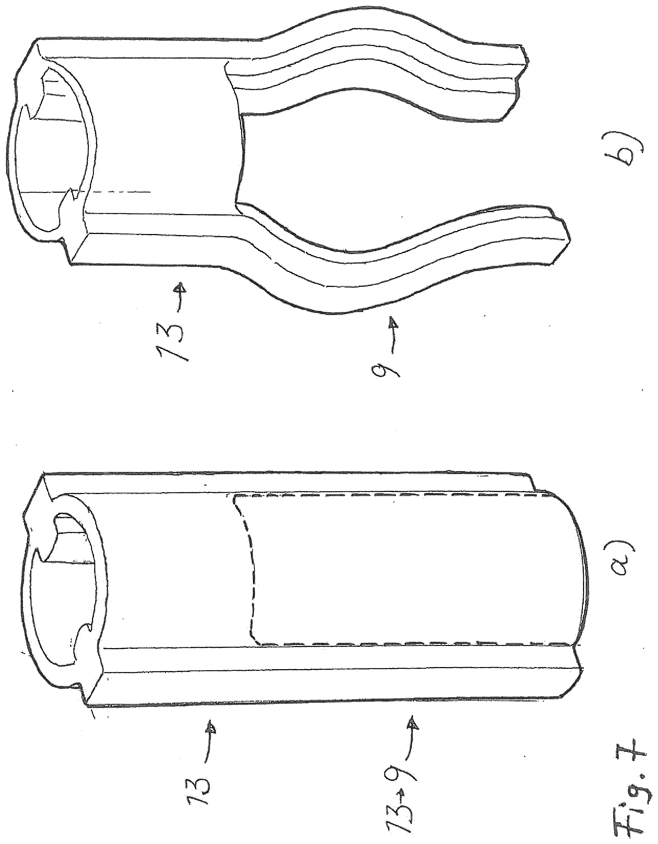

In Fig. 7 ist die Grundform eines Gabelstücks (Fig. 7B) gezeigt, welches, nach Bearbeitung, ein Gabelstück ähnlich dem in Fig. 2 gezeigten bildet. Man erkennt, dass das extrudierte Material 13, das die dickwandigen Bereiche des geschlossenen extrudierten Profils (Fig. 7A) bildet, sich in der Extrudierrichtung erstreckt, wobei der untere Teil davon, nach Ausschnitt des die dünnwandigen Bereiche bildenden Materials, die Beine für den Zwischenbereich des Gabelstücks bilden, mit dem unteren Bereich an den freien Beinenden.

Als ein spezielles Beispiel kann ein Gabelstück hergestellt werden wie das in Fig. 2 gezeigte. Dazu wird ein Rohling einer Al-Legierung aus EN-AW (AA) 6082 herangezogen, das zu dem Extrudierwerkzeug zum Extrudieren eines Rohprofils ähnlich dem in Fig. 7A gezeigten passt. Danach wird eine Wärmebehandlung (Lösungsglühen) durchgeführt und z.B. ein Wasser-Quenching kann durchgeführt werden, bevor (z.B. bei Raumtemperatur) der zentrale Bereich des Rohprofils unterhalb des oberen Anbringungsbereichs ausgestanzt wird. Die Form der Beine wird dann durch Aufbringung einer longitudinal gerichteten Kraft in einer Presse gebildet, um zu der Form des fertiggestellten Gabelstücks zu gelangen. Endbearbeitungsschritte wie die Bildung von Löchern/Gewinden und ebenfalls künstliches Altern können zur Fertigstellung des Gabelstücks ausgeführt werden.

Aus dem Obigen ist erkennbar, dass andere Kombinationen als diejenigen in den Figuren 2 bis 7 gezeigten möglich sind, um ein Gabelstück gemäß der vorliegenden Erfindung zu bilden.

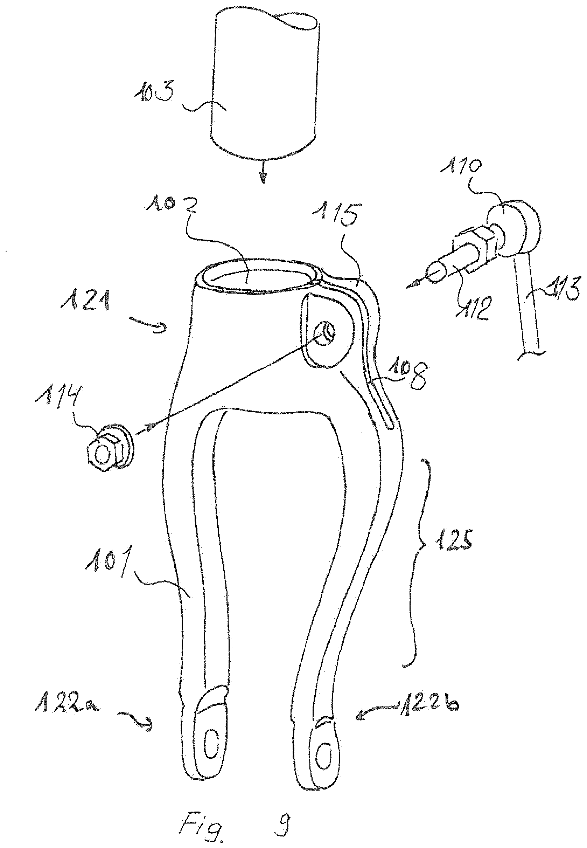

In Fig. 9 ist eine Verbindungseinrichtung 101 dargestellt, die an ihrem in Fig. 9 oberen Bereich eine zylindrische Öffnung 102 aufweist, die zu einem von einem oberen Bereich 121 der Verbindungseinrichtung umschlossenen Aufnahmeraum führt, in den eine Dämpfungseinheit 103 eingeführt und darin aufgenommen werden kann. In Umfangsrichtung (bezüglich der Dämpfungsachse) ist die Öffnung 102 und der Aufnahmeraum nicht völlig umschlossen, vielmehr ist ein Schlitz 108 gebildet, der einen Ansatz 115 in zwei Ansatzteile links und rechts des Schlitzes 108 trennt. Der Ansatz 115 weist eine Bohrung auf, die zur Aufnahme eines Stiftes oder Bolzens 112 ausgelegt ist. Indem nach durch die Bohrung des Ansatzes 115 eingeführten Bolzen 112 eine Gegenmutter 114 aufgeschraubt und angezogen wird, verengt oder schließt sich der Spalt unter Einwirkung der dadurch erzeugten Klemmkraft, und klemmt das Dämpfungsrohr 103 im Aufnahmeraum der Verbindungseinrichtung 101 schellenartig ein. In einer Modifizierung könnte der Bolzen 112 auch in ein zu seinem Gewinde passendes Gewinde im bezüglich der Einführrichtung hinteren Ansatzteil des Ansatzes 115 eingeschraubt werden.

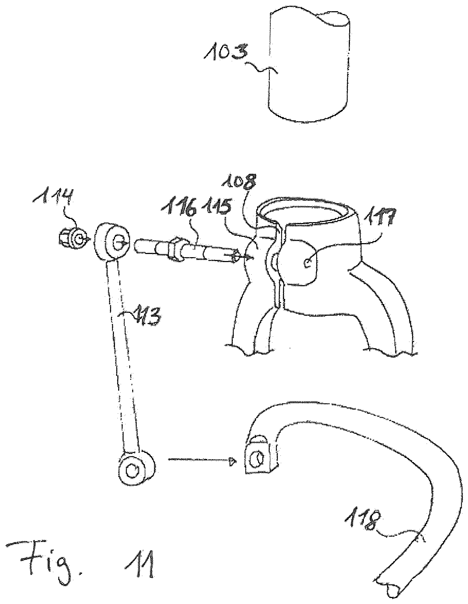

Am entgegengesetzten Ende des Bolzens 112 ist eine gelenkige Verbindung 110 vorgesehen, mit der eine Koppelstange 113 verbunden ist, die wiederum zu einem in Fig. 9 nicht gezeigten Stabilisator führt (siehe z.B. Fig. 11). Man erkennt die schlanke und besonders einfache Gestaltung der Verbindungseinrichtung 101 aus wenigen Bauteilen, insbesondere ist die Verbindungseinrichtung 101 mit ihren Beinen, der Begrenzung des Aufnahmeraums und dem Ansatz 115 einstückig gebildet. Ein bevorzugtes Herstellungsverfahren ist das Extrudieren, insbesondere das in Fig. 9 gezeigte Ausführungsbeispiel lässt sich jedoch auch durch Schmieden oder Gießen in vereinfachter Weise herstellen. Ein getrennter Ansatz für die Ankopplung des Stabilisators ist nicht mehr erforderlich und nicht mehr vorgesehen. Bei der Ausführungsform von Fig. 9 ist der Ansatz und somit die Stabilisatorankopplung gebildet durch eine Fortführung eines Beins der Verbindungseinrichtung 101 über den in Dämpfungsrichtung gesehen Höhenbereich des Aufnahmeraums.

An dem der Öffnung 102 entgegengesetzten Ende der Verbindungseinrichtung 101 kann zwischen den Beinbereichen 122a und 122b ein Aufhängearm einer Radaufhängung befestigt werden. In dieser Ausführungsform ist jeder Beinbereich 122a, 122b zum oberen Bereich fortgeführt.

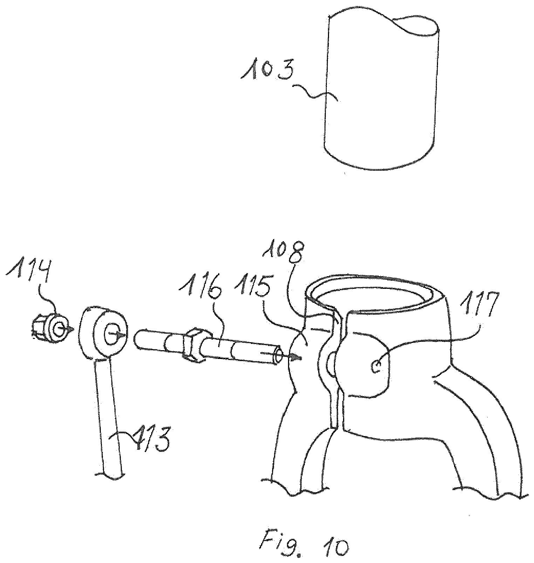

Bei einem weiteren Ausführungsbeispiel, das in Fig. 10 gezeigt ist, ist Spalt 108 und Ansatz 115 mit einer Bohrung versehen, deren Erstreckungsrichtung im Wesentlichen in einer Richtung verläuft, bezüglich der sich die unteren Endbereiche (in Fig. 10 nicht gezeigt) gegenüberliegen. In diesem Ausführungsbeispiel greift ein beidseitig gewindebehafteter Klemmbolzen 116 in eine mit einem Innengewinde versehene Bohrung 117 im Ansatz 115 ein. Am entgegengesetzten Ende des Bolzens 116 wird eine Kopplungsstange 113 mit einer Mutter 114 befestigt.

Man erkennt, dass eine Mehrzahl konkreter Anordnungen möglich ist, die die Ankopplung des Stabilisators über einen Ansatz 115 ermöglicht, der zur Erzeugung der die Haltekraft bewirkenden Klemmkraft vorgesehen ist, ohne dass ein zusätzlicher Ansatz für die Stabilisatoranordnung erforderlich wäre.

Die Darstellung von Fig. 11 entspricht der von Fig. 10, es ist jedoch noch eine Fortsetzung der Kopplungsstange 113 eingezeichnet, sowie ein Stabilisator 118, an deren freien Ende das dem Bolzen 116 abgewandte Ende der Kopplungsstange 113 ankoppelbar ist.

In bevorzugten Ausgestaltungen verlaufen die Bohrungen in Ansatz 115 in einer Erstreckungsrichtung im Wesentlichen parallel zur Ankopplungsachse der einander gegenüberliegenden Beinbereiche oder im Wesentlichen senkrecht dazu, je nach Art der Einbaulage der Verbindungseinrichtung 101 und des Stabilisators 118.

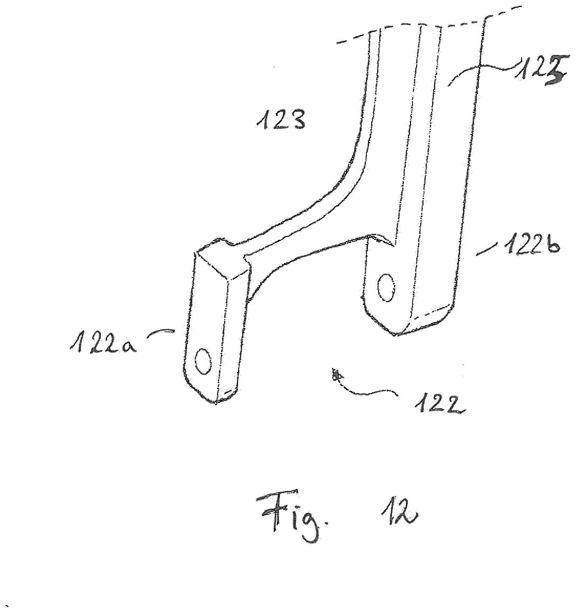

In Fig. 12 ist noch eine alternative Gestaltung des zweiten (unteren) Bereichs und des Zwischenbereichs zwischen ersten und zweiten Bereich gezeigt. Hier setzen sich nicht beide einander zugewandten Beinbereiche 122a, 122b bis über den Zwischenbereich 125 hinweg fort, sondern lediglich das in Fig. 12 rechte Bein ist durchgehend, und der dem zweiten Bereich gegenüberliegende Beinbereich gabelt sich erst beabstandet vom ersten Bereich ab, so dass am Zwischenbereich 125 eine einseitig offene Ausbuchtung 123 gebildet ist.

Demgemäß sind die Merkmale der voranstehenden Beschreibung bezüglich der Figuren nicht als einschränkend auszulegen. Vielmehr können Merkmale der nachfolgenden Ansprüche wie der vorangehenden Beschreibung allein oder in Kombination für die vorliegende Erfindung wesentlich sein. So ist, wie bereits aus dem nicht exklusiven oder für Möglichkeiten der Bildung des freien Raums zu verstehen ist, dieser durch Materialausschnitt des extrudierten Materials unterhalb des oberen Anbringungsbereichs und zudem durch Verformung dieses Materials erreichbar.

Die Menge des ausgeschnittenen Materials kann dabei auch mehr als 40 % oder mehr ausmachen.

Es versteht sich, dass die Druckkrafteinleitung des Gabelstücks auf den Dämpfer überwiegend oder nahezu vollständig über die dickwandigen Bereiche 13 des oberen Anbringungsbereichs erfolgen kann.

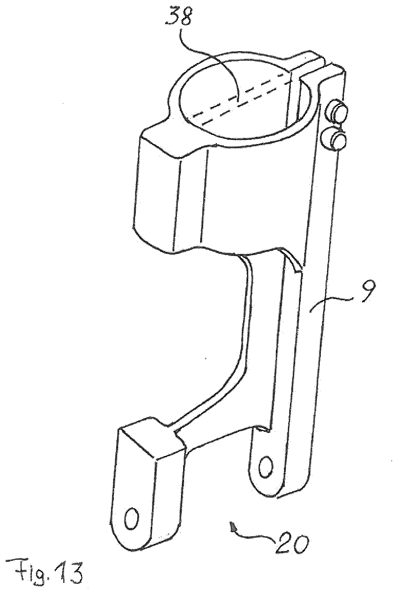

Steg 38 kann auch schlanker gehalten werden, ohne Verdickung im Bereich der die Verstärkungsrippen bildenden Stegränder, siehe auch Fig. 13.

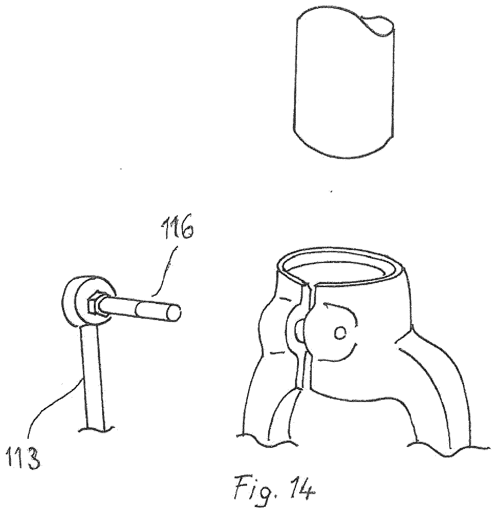

Der Klemmbolzen 116 kann auch in ein Gewinde der Kopplungsstange 113 eingeschraubt oder auch einstückig mit der Kopplungsstange gebildet sein, siehe auch Fig. 14.

Der Winkel zwischen den Bohrungen im Ansatz 115 und der Ankopplungsachse der einander gegenüberliegenden Beinbereiche ist nicht auf parallel oder orthogonale Varianten eingeschränkt, er kann z. B. auch im Bereich [-70°; 70°] liegen.

## Patentansprüche

1. Verbindungseinrichtung (1) für die Anbindung einer Dämpfungseinheit eines Fahrzeugs innerhalb einer Radaufhängung des Fahrzeugs, wobei die Verbindungseinrichtung aufweist
einen oberen Anbringungsbereich zum Anbringen der Dämpfungseinheit, der eine wenigstens teilweise einen Aufnahmeraum für die Dämpfungseinheit umgebende Umfassung (12, 13) des Aufnahmeraums bildet, wobei sich der Aufnahmeraum um eine erste Achse als die Dämpfungsachse der Dämpfungseinheit erstreckt und wobei die Umfassung (12, 13) einen axialen Schlitz (22) aufweist, der einen Klemmsitz der Dämpfungseinheit in dem Aufnahmeraum erlaubt,
einen unteren Anbringungsbereich (14) für die Ankopplung an den radseitigen Teil der Radaufhängung, wobei der untere Anbringungsbereich insbesondere zwei voneinander beabstandete untere Abschnitte mit einem Anbringungsraum dazwischen aufweist, und
einen Zwischenbereich (9), der den oberen Anbringungsbereich mit dem unteren Anbringungsbereich verbindet, wobei die Haupterstreckung des Zwischenbereichs der Richtung der ersten Achse entspricht, und wobei der Zwischenbereich das Passieren einer Antriebswelle (4) des Fahrzeugs erlaubt,
wobei die Verbindungseinrichtung aus einem extrudierten Teil gefertigt ist, dessen Extrudierrichtung die Erstreckungsrichtung des extrudierten Materials ist, welches dann den Zwischenbereich der Verbindungseinrichtung bildet.

2. Verbindungseinrichtung nach Anspruch 1, bei dem ein/der freie Raum wenigstens teilweise durch einen Ausschnitt eines extrudierten Materials unterhalb des extrudierten Materials gebildet ist, welches den oberen Anbringungsbereich bildet, oder durch eine Verformung dieses Materials.

3. Verbindungseinrichtung nach einem der vorhergehenden Ansprüche, bei dem das extrudierte Teil einen extrudierten Materialbereich aufweist, der sich partiell innerhalb des (ersten) Aufnahmeraums erstreckt und dann zum Teil ein funktionales Element der Verbindungseinrichtung bildet.

4. Verbindungseinrichtung nach Anspruch 3, bei der das funktionale Element ein oder mehrere Verstärkungsrippen (19) für das eine Bein oder die zwei Beine sind, oder eine die beiden unteren Abschnitte verbindende Brücke.

5. Verbindungseinrichtung nach einem der vorhergehenden Ansprüche, bei der ein Bein oder zwei Beine der Verbindungseinrichtung bezüglich des extrudierten Teils verformt (16, 17, 18) sind, um einen/den freien Raum zu vergrößern, während es/sie die Haupterstreckungsrichtung beibehält.

6. Verbindungseinrichtung nach einem der vorhergehenden Ansprüche, bei dem extrudiertes Material des extrudierten Teils, welches wenigstens einen oberen Beinbereich bildet, wenigstens teilweise auch in dem Bereich axialer Länge des oberen Anbringungsbereichs der Verbindungseinrichtung gebildet ist.

7. Verbindungseinrichtung nach Anspruch 5 oder 6, bei der der obere Beinbereich einen Schlitz (22) aufweist, insbesondere mit dem Schlitz (22) des umgebenden Bereichs ausgerichtet und eine Klemmeinrichtung (23) vorgesehen ist, um die Schlitzweiten zu verringern/zu vergrößern.

8. Verbindungseinrichtung nach einem der vorhergehenden Ansprüche, bei dem die Klemmeinrichtung zum Klemmen der Dämpfungseinheit, insbesondere durch Verrringerung/Vergrößerung der Schlitzweite, durch Teile (25; 26) bereitgestellt ist, die nicht zusammen mit dem extrudierten Teil extrudiert sind.

9. Verbindungseinrichtung nach einem der vorhergehenden Ansprüche, bei der ein Bein wenigstens teilweise von extrudiertem Material gebildet ist, das in seinem oberen Abschnitt die Umfassung bildet.

10. Verbindungseinrichtung nach einem der vorhergehenden Ansprüche, bei dem die Umfassung wenigstens einen Wandabschnitt (12) einer ersten Wanddicke und wenigstens einen Wandabschnitt (13) einer zweiten Wanddicke aufweist, die größer ist als die erste Wanddicke.

11. Radaufhängung mit einer Verbindungseinrichtung nach einem der vorhergehenden Ansprüche.

12. Verfahren zur Herstellung einer nach einem der Ansprüche 1 bis 10 ausgebildeten Verbindungseinrichtung, aufweisend die Schritte des Extrudierens des extrudierten Teils, aus dem die Verbindungseinrichtung gefertigt wird, und das Ausführen von Schneidschritten zur Entfernung von extrudiertem Material, das nicht Teil der Verbindungseinrichtung wird.

13. Radaufhängungsanordnung mit einer Verbindungseinrichtung nach einem der Ansprüche 1 bis 11.

14. Fahrzeug mit einer Radaufhängungsanordnung nach Anspruch 13.

## Claims

1. A connection system (1) for attaching a damping unit of a vehicle, inside a wheel suspension of the vehicle, wherein the connection system comprises:
an upper attachment region for attaching the damping unit, said attachment region forming an enclosure (12, 13) of a receiving area for the damping unit that at least partially surrounds said receiving area, wherein the receiving area extends around a first axis which is the damping axis of the damping unit, and wherein the enclosure (12, 13) has an axial slot (22), which allows a clamping fit of the damping unit in the first receiving area,
a lower attachment region (14) for coupling to the wheel-side part of the wheel suspension, wherein the lower attachment region has in particular two lower sections spaced apart from one another with an attachment area therebetween, and
an intermediate region (9), which connects the upper attachment region to the lower attachment region, wherein the main extent of the intermediate region corresponds to the direction of the first axis, and wherein the intermediate region allows the passage of a drive shaft (4) of the vehicle,
wherein the connection system is manufactured from an extruded part, whose direction of extrusion is the direction of extent of the extruded material, which then forms the intermediate region of the connection system.

2. The connection system according to claim 1, wherein a/the free space is formed at least partially by a cutout of extruded material underneath the extruded material that forms the upper attachment region, or by a deformation of this material.

3. The connection system according to one of the preceding claims, wherein the extruded part has an extruded material region which extends partially within the (first) receiving area and then partially forms a functional element of the connection system.

4. The connection system according to claim 3, wherein the functional element is one or more reinforcing ribs (19) for the one leg or the two legs, or a bridge connecting the two lower sections.

5. The connection system according to one of the preceding claims, wherein one leg or two legs of the connection system is or are deformed (16, 17, 18) with respect to the extruded part in order to enlarge a/the free space, while the one or two legs do this without modifying the main direction of extent.

6. The connection system according to one of the preceding claims, wherein extruded material of the extruded part, which forms at least an upper leg region, is also formed at least partially in the region of the axial length of the upper attachment region of the connection system.

7. The connection system according to claim 5 or 6, wherein the upper leg region has a slot (22) that is in particular aligned with the slot (22) of the surrounding region, and provides a clamping device (23) for reducing or enlarging the slot widths.

8. The connection system according to one of the preceding claims, wherein the clamping device for clamping the damping unit, in particular by reducing/enlarging the slot width, is provided by parts (25; 26) which are not extruded together with the extruded part.

9. The connection system according to one of the preceding claims, wherein one leg is formed at least partially from extruded material that forms the enclosure in its upper section.

10. The connection system according to one of the preceding claims, wherein the enclosure has at least one wall section (12) with a first wall thickness and at least one wall section (13) with a second wall thickness that is greater than the first wall thickness.

11. A wheel suspension comprising a connection system according to one of the preceding claims.

12. A method for producing a connection system configured according to one of claims 1 to 10, including the steps of extruding the extruded part from which the connection system is produced, and carrying out the cutting steps to remove extruded material that is not part of the connection system.

13. A wheel suspension arrangement comprising a connection system according to one of claims 1 to 11.

14. A vehicle having a wheel suspension arrangement according to claim 13.

## Revendications

1. Dispositif de liaison (1) destiné au raccord d'une unité d'amortissement de véhicule au sein d'une suspension de roue du véhicule, le dispositif de liaison présentant :
une zone de fixation supérieure permettant de fixer l'unité d'amortissement et formant une enceinte (12, 13) d'un espace de logement destiné à l'unité d'amortissement, laquelle entoure au moins partiellement ledit espace de logement, lequel espace de logement s'étend autour d'un premier axe servant d'axe d'amortissement de l'unité d'amortissement, ladite enceinte (12, 13) présentant une fente axiale (22) qui permet un ajustement par serrage de l'unité d'amortissement dans l'espace de logement,
une zone de fixation inférieure (14) destinée à être couplée à la partie côté roue de la suspension de roue, la zone de fixation inférieure présentant notamment deux portions inférieures espacées l'une de l'autre par un espace de fixation, et
une zone intermédiaire (9) qui relie la zone de fixation supérieure à la zone de fixation inférieure, l'étendue principale de la zone intermédiaire correspondant à la direction du premier axe, et ladite zone intermédiaire permettant le passage d'un arbre d'entraînement (4) du véhicule ;
ledit dispositif de liaison étant réalisé à partir d'une pièce extrudée dont la direction d'extrusion est la direction dans laquelle s'étend le matériau extrudé, qui forme alors la zone intermédiaire du dispositif de liaison.

2. Dispositif de liaison selon la revendication 1, dans lequel un/ledit espace libre est au moins partiellement formé par une découpe d'un matériau extrudé sous-jacent au matériau extrudé qui forme la zone de fixation supérieure, ou par une déformation de ce matériau.

3. Dispositif de liaison selon l'une des revendications précédentes, dans lequel la pièce extrudée présente une zone de matériau extrudé qui s'étend partiellement à l'intérieur du (premier) espace de logement et forme alors partiellement un élément fonctionnel du dispositif de liaison.

4. Dispositif de liaison selon la revendication 3, dans lequel l'élément fonctionnel consiste en une ou plusieurs nervures de renfort (19) destinées à ladite ou auxdites deux branches, ou en un pont reliant les deux portions inférieures.

5. Dispositif de liaison selon l'une des revendications précédentes, dans lequel une branche ou deux branches du dispositif de liaison présentent des déformations (16, 17, 18) par rapport à la pièce extrudée, permettant d'accroître un/ledit espace libre sans modifier la direction d'étendue principale.

6. Dispositif de liaison selon l'une quelconque des revendications précédentes, dans lequel le matériau extrudé de la pièce extrudée, qui forme au moins une zone supérieure de branche, est également formé au moins partiellement dans la zone de longueur axiale de la zone de fixation supérieure du dispositif de liaison.

7. Dispositif de liaison selon la revendication 5 ou 6, dans lequel la zone supérieure de branche présente une fente (22), qui est notamment alignée avec la fente (22) de la zone environnante, et assure un dispositif de serrage (23) permettant de réduire ou d'augmenter les largeurs de fente.

8. Dispositif de liaison selon l'une des revendications précédentes, dans lequel le dispositif de serrage permettant de serrer l'unité d'amortissement, notamment en réduisant/augmentant la largeur de fente, est assuré par des pièces (25 ; 26) qui ne sont pas extrudées en même temps que la pièce extrudée.

9. Dispositif de liaison selon l'une des revendications précédentes, dans lequel une branche est au moins partiellement formée de matériau extrudé qui forme l'enceinte dans sa partie supérieure.

10. Dispositif de liaison selon l'une des revendications précédentes, dans lequel l'enceinte présente au moins une portion de paroi (12) d'une première épaisseur de paroi et au moins une portion de paroi (13) d'une deuxième épaisseur de paroi supérieure à la première.

11. Suspension de roue pourvue d'un dispositif de liaison selon l'une des revendications précédentes.

12. Procédé de fabrication d'un dispositif de liaison conçu selon l'une des revendications 1 à 10, comprenant les étapes d'extrusion de la pièce extrudée à partir de laquelle le dispositif de liaison est fabriqué, et la réalisation des étapes de découpe permettant d'éliminer la matière extrudée qui n'est pas destinée à faire partie du dispositif de liaison.

13. Agencement de suspension de roue pourvu d'un dispositif de liaison selon l'une des revendications 1 à 11.

14. Véhicule pourvu d'un agencement de suspension de roue selon la revendication 13.
